# EUROPÄISCHE PATENTSCHRIFT

(11) **EP 1 673 558 B1**
(45) Veröffentlichungstag und Bekanntmachung des Hinweises auf die Patenterteilung: **27.12.2006**
(21) Anmeldenummer: 04790193.9
(22) Anmeldetag: 08.10.2004
(51) Int. Cl.: F16H 55/22

(54) **HILFSKRAFTLENKUNG ODER FREMDKRAFTLENKUNG**
POWER-ASSISTED STEERING SYSTEM OR POWER STEERING SYSTEM
DIRECTION ASSISTEE OU ACTIONNEE PAR UNE FORCE AUXILIAIRE

(30) Priorität: 15.10.2003 DE 10347780
(43) Veröffentlichungstag der Anmeldung: 28.06.2006
(73) Patentinhaber: ZF Lenksysteme GmbH, 73527 Schwäbisch Gmünd (DE)
(72) Erfinder: BERNHARD, Werner, 73563 Mögglingen (DE); HETZEL, Oliver, 73550 Waldstetten (DE); FISCHER, Joachim, 73529 Schwäbisch Gmünd (DE); BEUTLER, Olaf, 49356 Diepholz (DE); OTTENSTEIN, Achim, 73568 Durlangen (DE); KAISSER, Richard, 73116 Wäschenbeuren (DE); SCHUSTER, Reinhold, 73579 Schechingen (DE); RATZEL, Wolf-Ingo, 70771 Leinfelden-Echterdingen (DE)
(86) Internationale Anmeldenummer: PCT/EP2004/011241
(87) Internationale Veröffentlichungsnummer: WO 2005/038303

(56) Entgegenhaltungen:
- WO-A-02/38432
- GB-A- 1 168 213
- GB-A- 1 571 628
- US-A- 379 022
- US-A- 1 666 576
- US-A- 4 946 427
- PATENT ABSTRACTS OF JAPAN Bd. 2000, Nr. 14, 5. März 2001 (2001-03-05) -& JP 2000 329217 A (NSK LTD), 30. November 2000 (2000-11-30)

## Beschreibung

Die Erfindung betrifft eine Hilfskraft- oder Fremdkraftlenkung nach dem Oberbegriff des Anspruchs 1.

Bei Hilfskraftlenkungen oder Fremdkraftlenkungen, mit einem Elektromotor, der ein Schraubradgetriebe antreibt, das ein gebautes Zahnrad, vorzugsweise mit einem Zahnkranz aus Kunststoff, enthält, sorgt das gebaute Zahnrad bei größeren Abmessungen des Schraubradgetriebes und in Paarung mit Metallrädern hoher Flankenglätte für eine große Laufruhe bei hoher Wirtschaftlichkeit. Gebaute Zahnräder sind bekannt.

Die WO 01/44694 A1 beschreibt ein gebautes Zahnrad, welches für ein für eine Hilfskraft- oder Fremdkraftlenkung bestimmtes Schraubradgetriebe geeignet ist, mit einem zweigeteilten Zahnkranz der auf einer Nabe verschraubt ist. Die Nabe weist an einem axialen Ende einen ringförmigen Bund auf. Mit einer Scheibe, die in axialer Richtung des gebauten Zahnrades auf der gegenüberliegenden Seite des ringförmigen Bundes angeordnet ist, wird der Zahnkranz formschlüssig an der Nabe gehalten. Sowohl die Scheibe als auch der ringförmige Bund der Nabe weisen einen ringförmigen Vorsprung auf, der in axialer Richtung des gebauten Zahnrades jeweils in eine Ringnut an den Seitenflächen des Zahnkranzes eingreift und den Zahnkranz in radialer Richtung sichert.

Zur Übertragung des Drehmomentes von dem Zahnkranz auf die Nabe oder umgekehrt sind Schraubbolzen durch die Scheibe, den Zahnkranz und den ringförmigen Bund der Nabe geführt. Eine Selbstzentrierung der einzelnen Bauteile und insbesondere der Schraubbolzen ist nicht gegeben, weshalb die Kraftübertragung in dem gebauten Zahnrad und der Montageablauf des gebauten Zahnrades nicht optimiert sind.

Aus der JP 2000 329217 A ist ein Zahnrad mit den Merkmalen des Oberbegriffes des Anspruches 1 bekannt.

Der Erfindung liegt die Aufgabe zugrunde, ein gebautes Zahnrad für Hilfskraftlenkungen oder Fremdkraftlenkungen, mit einem Elektromotor, der ein Schraubradgetriebe antreibt, so zu verbessern, dass dessen Montage vereinfacht ist und die Kraftübertragung in dem gebauten Zahnrad vergleichmäßigt ist.

Die Aufgabe wird bei Hilfskraftlenkungen oder Fremdkraftlenkungen, mit einem Elektromotor, der ein Schraubradgetriebe antreibt mit einem gebauten Zahnrad mit den Merkmalen des Anspruchs 1 gelöst.

Dadurch, dass der ringförmige, axiale Vorsprung der Scheibe in axialer Richtung eine Vertiefung aufweist und dadurch ein Formschluß in tangentialer Richtung mit einem Vorsprung und mit einer Vertiefung an einer axialen Seitenfläche des Zahnkranzes möglich ist, ist eine Zentrierhilfe in tangentialer Richtung zwischen der Scheibe und dem Zahnkranz geschaffen, der eine einfache, rasche Montage des gebauten Zahnrades erlaubt. Der Vorsprung an der axialen Seitenfläche des Zahnkranzes ist konisch ausgebildet. Insbesondere wenn mehrere Vertiefungen vorgesehen sind, ist eine über den Umfang der Scheibe verteilte, gleichmäßige Drehmomentübertragung zwischen Nabe, Scheibe und Zahnkranz ermöglicht.

Bevorzugte Ausführungen ergeben sich aus den Unteransprüchen.

Der Formschluß zwischen der Scheibe und dem Zahnkranz wird durch Vorsprünge und Vertiefungen an der Scheibe und durch komplementäre Vorsprünge und Vertiefungen in der Seitenfläche des Zahnkranzes in jeweils axialer Richtung des gebauten Zahnrades erreicht. Die Vertiefungen und Vorsprünge bilden eine Mitnahmeverzahnung in tangentialer Richtung. Es ist zweckmäßig, die Vorsprünge und Vertiefungen quaderförmig um den Umfang der Scheiben und des Zahnkranzes anzuordnen, indem die Vertiefungen den ursprünglich ringförmigen, axialen Vorsprung am Umfang der Scheibe rechteckförmig in radialer Richtung durchziehen. Die Vertiefungen können den ringförmigen, axialen Vorsprung auch mit gekrümmten Flanken durchziehen. Die Scheibe kann einstückig mit der Nabe gebildet sein oder an der Nabe form- oder kraftschlüssig auf geeignete Weise festgelegt sein.
Der Zahnkranz ist bevorzugt axial zwischen zwei Scheiben festgelegt und mit diesem an der Nabe drehfest angeordnet. Die zweite Scheibe ist bevorzugt in ihrer Gestalt, ihrer Querschnittsform und ihrem Innen- und Außendurchmesser ähnlich oder gleich wie die erste Scheibe gestaltet. Die zweite Scheibe weist ebenso einen von einer oder mehreren Vertiefungen unterbrochenen ringförmigen, axialen Vorsprung, zu einer axialen Seitenfläche des Zahnkranzes gerichtet, auf.

Die Gestalt und die Anzahl der Vertiefungen und Vorsprünge an der zweiten Scheibe und der Seitenfläche des Zahnkranzes sind bevorzugt gleich wie an der ersten Scheibe und an deren komplementären Seitenfläche des Zahnkranzes.

Die zweite Scheibe ist mit Nieten oder mit Schraubbolzen oder durch Reibschweißen mit dem Zahnkranz und/oder mit der ersten Scheibe, die an der Nabe festgelegt ist, verbunden.

Die erfindungsgemäße Bauform des gebauten Zahnrades ist geeignet, den Zahnkranz aus einem thermoplastischen oder duroplastischen Kunststoff zu bilden. Bevorzugt ist das gebaute Zahnrad zur Darstellung eines geräuscharmen Getriebes einer Fremdkraft- oder Hilfskraftlenkung eines Fahrzeugs geeignet, und insbesondere als Schraubrad einer Elektrolenkung.

Die Erfindung wird nun näher anhand eines Ausführungsbeispiels beschrieben und anhand der beiliegenden Zeichnung wiedergegeben.
- Fig. 1: zeigt einen Längsschnitt durch ein gebautes Zahnrad entlang der Linie II - II in Fig. 2,
- Fig. 2: zeigt eine Ansicht des gebauten Zahnrades in Pfeilrichtung I in Fig. 1,
- Fig. 3: zeigt eine Explosionsdarstellung eines weiteren gebauten Zahnrades.

In der Zeichnung ist ein gebautes Zahnrad dargestellt, wie es in einem Schraubradgetriebe für Hilfskraftlenkungen oder Fremdkraftlenkungen zur Anwendung kommt, bei dem das Zahnrad als Schraubrad dient, das in eine Schraube oder Schnecke eingreift, um eine Lenkunterstützung herbei zu führen bzw. die ganze benötigte Lenkkraft aufzubringen.

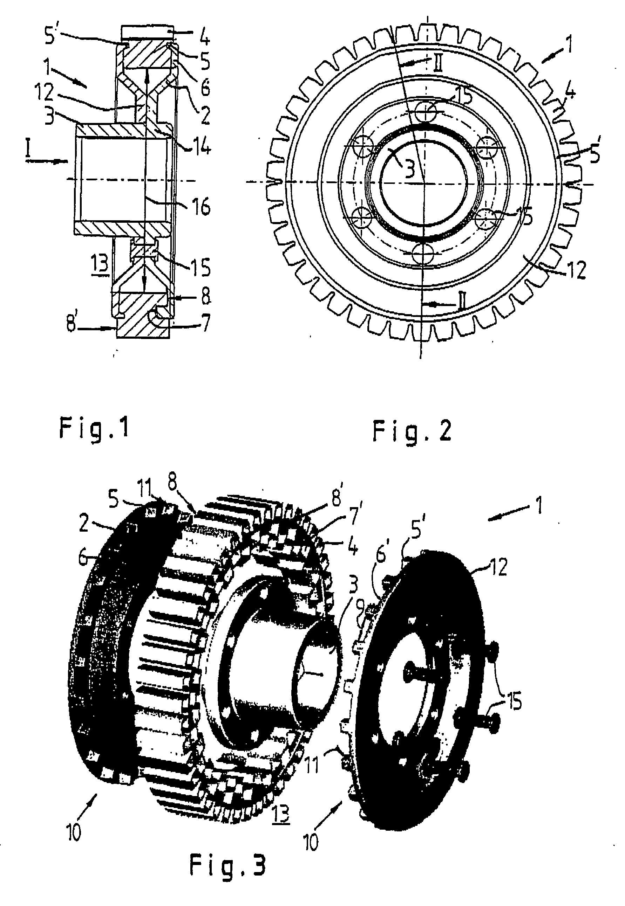

In Figur 1 ist in einem Längsschnitt entlang der Linie II-II in Fig. 2 ein gebautes Zahnrad 1 gezeigt. Das gebaute Zahnrad 1 ist aus einer zylinderförmigen Nabe 3, an deren einem axialen Ende 14 eine im Querschnitt gekröpfte erste Scheibe 2 einstückig angeformt ist, aus einem ringförmigen Zahnkranz 4 und einer zweiten Scheibe 12 gebildet. Der Zahnkranz 4 ist aus einem thermoplastischen Kunststoff gebildet. Die erste und zweite Scheibe 2,12 schließen den Zahnkranz 4 in axialer Richtung ab und sind gegen diesen mit Hilfe von sechs Nieten 15, die die Scheiben 2,12 und den Zahnkranz 4 durchragen, gepresst. Die Nabe 3 und die erste und zweite Scheibe 2,12 sind aus Metall gefertigt.

Die beiden Scheiben 2,12 weisen einen in axialer Richtung auf den Zahnkranz 4 zugewandten ringförmigen Vorsprung 5,5' an ihrem äußeren Umfangsrand auf. Die ringförmigen Vorsprünge 5,5' sind von Vertiefungen 6,6' die in radialer Richtung der Scheiben 2,12 betrachtet, einen rechteckförmigen Querschnitt haben, unter brochen (vgl. Fig. 3). Die dadurch gebildeten verzahnungsartigen Vorsprünge 5,5' ragen im montierten Zustand des gebauten Zahnrades 1 in Vertiefungen 7,7' an den axialen Seitenflächen 8,8' des Zahnkranzes 4. Dadurch wird ein Formschluß in radialer und tangentialer Richtung der Scheiben 2,12 mit dem Zahnkranz 4 bewirkt. Die Vertiefungen 7,7' und die Vorsprünge 5,5' sind konisch zueinander geformt, so dass die Montage des gebauten Zahnrades 1 erleichtert ist. Die Vertiefungen 6,6' an den Scheiben 2,12 sind in gleichem tangentialen Abstand 9 zueinander angeordnet und bilden eine Mitnahmeverzahnung 10, die am äußeren Umfangsrand der Scheiben 2,12 in axialer Richtung auf den Zahnkranz 4 weisen. Die Flanken 11 der Vorsprünge 5,5' können anstatt konisch eben auch konisch gekrümmt zu den Vertiefungen 7,7' verlaufen.

Wie Fig. 2 in einer Draufsicht in Pfeilrichtung 1 in Fig. 1 auf das gebaute Zahnrad 1, und wie Fig. 3 in einer Explosionsdarstellung eines weiteren gebauten Zahnrades 1 zeigt, sind die Nieten 15 in radialer Richtung in Nabennähe achsensymmetrisch zueinander angeordnet und versenkt zur Außenkontur der Scheiben 2,12 angeordnet. Der Zahnkranz 4 ist geradverzahnt. Der Zahnkranz 4 ragt in radialer Richtung mit seinem Innendurchmesser 16 in die Scheibenabstützung, wodurch elastische radiale und axiale Dehnungen des Kunststoffzahnkranzes 4 etwa durch Wasseraufnahme oder Temperatureinfluß ermöglicht sind, ohne dass auf die Verbindungsstellen der Nieten 15 eingewirkt wird.

Das gebaute Zahnrad 1 in Figur 3 ist im Gegensatz zu dem in den Figuren 1 und 2 gezeigten Zahnrad 1, aus einer Nabe 3, zwei Scheiben 2,12, und einem Zahnkranz 4 gebildet, sodaß die Nabe 3 und die Scheiben 2,12 getrennte, formschlüssig zu verbindende Bauteile darstellen.

## Patentansprüche

1. Hilfskraftlenkung oder Fremdkraftlenkung, mit einem Elektromotor, der ein Schraubradgetriebe antreibt, das ein gebautes Zahnrad enthält, das als Schraubrad dient und in eine Schraube eingreift, das einen über eine erste Scheibe (2) mit einer Nabe (3) verbindbaren Zahnkranz (4) aufweist, wobei die erste Scheibe (2) mit einem ringförmigen Vorsprung (5) axial in den Zahnkranz (4) eingreift, wobei der ringförmige, axiale Vorsprung (5) in axialer Richtung eine Vertiefung (6) aufweist, wobei der Vorsprung (5) in eine Vertiefung (7) an einer axialen Seitenfläche (8) des Zahnkranzes (4) formschlüssig eingreift oder ein axialer Vorsprung an der axialen Seitenfläche (8) des Zahnkranzes (4) in die Vertiefung (6) der ersten Scheibe (2) eingreift, **dadurch gekennzeichnet, dass** der Vorsprung an der axialen Seitenfläche (8) des Zahnkranzes (4) konisch ausgebildet ist.

2. Hilfskraftlenkung oder Fremdkraftlenkung nach Anspruch 1, **dadurch gekennzeichnet, dass** an dem ringförmigen Vorsprung (5) der ersten Scheibe (2) mehrere Vertiefungen (6) in Umfangsrichtung der Scheibe (2) angeordnet sind.

3. Hilfskraftlenkung oder Fremdkraftlenkung nach Anspruch 2, **dadurch gekennzeichnet, dass** die Vertiefungen (6) in gleichem Abstand (9) zueinander angeordnet sind und eine Mitnahmeverzahnung (10) bilden.

4. Hilfskraftlenkung oder Fremdkraftlenkung nach einem der Ansprüche 1 bis 3, **dadurch gekennzeichnet, dass** die Vertiefung (6) in radialer Richtung der ersten Scheibe (2) den ringförmigen Vorsprung (5) rechteckförmig durchzieht.

5. Hilfskraftlenkung oder Fremdkraftlenkung nach einem der Ansprüche 1 bis 3, **dadurch gekennzeichnet, dass** die Vertiefung (6) in radialer Richtung der ersten Scheibe (2) den ringförmigen Vorsprung (5) gekrümmte Flanken (11) bildend durchzieht.

6. Hilfskraftlenkung oder Fremdkraftlenkung nach einem der Ansprüche 1 bis 5, **dadurch gekennzeichnet, dass** eine zweite Scheibe (12) auf der der ersten Scheibe (2) in axialer Richtung des Zahnkranzes (4) gegenüberliegenden Seite (13) angeordnet ist.

7. Hilfskraftlenkung oder Fremdkraftlenkung nach Anspruch 6, **dadurch gekennzeichnet, dass** die zweite Scheibe (12) an einem axial in den Zahnkranz (4) eingreifenden, ringförmigen Vorsprung (5) einer zweiten axialen Seitenfläche (8') des Zahnkranzes (4) formschlüssig eingreift.

8. Hilfskraftlenkung oder Fremdkraftlenkung nach Anspruch 7, **dadurch gekennzeichnet, dass** die Zahl und/oder die Gestalt der Vertiefungen (6') an der zweiten Scheibe (12) etwa gleich wie an der ersten Scheibe (2) sind.

9. Hilfskraftlenkung oder Fremdkraftlenkung nach einem der Ansprüche 1 bis 8, **dadurch gekennzeichnet, dass** eine Scheibe (2,12) einstückig mit der Nabe (3) gebildet ist.

10. Hilfskraftlenkung oder Fremdkraftlenkung nach einem der Ansprüche 7 bis 9, **dadurch gekennzeichnet, dass** die zweite Scheibe (12) mit der Nabe (3) und/oder der ersten Scheibe (2) verschraubt oder vernietet ist.

11. Hilfskraftlenkung oder Fremdkraftlenkung nach einem der Ansprüche 7 bis 9, **dadurch gekennzeichnet, dass** die zweite Scheibe (12) mit der Nabe (3) und/oder der ersten Scheibe (2) durch Reibschweißen verbunden ist.

12. Hilfskraftlenkung oder Fremdkraftlenkung nach einem der Ansprüche 1 bis 11, **dadurch gekennzeichnet, dass** der Zahnkranz (4) aus einem thermoplastischen oder duroplastischen Kunststoff gebildet ist.

13. Hilfskraftlenkung oder Fremdkraftlenkung nach einem der Ansprüche 1 bis 12, **dadurch gekennzeichnet, dass** das gebaute Zahnrad (1) Teil einer Fremd- oder Hilfskraftlenkung eines Fahrzeugs ist.

14. Hilfskraftlenkung oder Fremdkraftlenkung nach Anspruch 13, **dadurch gekennzeichnet, dass** das gebaute Zahnrad (1) ein Schraubrad einer Elektrolenkung ist.

## Claims

1. Power steering system or external power steering system, having an electric motor which drives a helical gear mechanism which contains an installed gearwheel which serves as a helical gear and engages into a worm, which helical gear mechanism has a crown gear (4) which can be connected to a hub (3) via a first plate (2), the first plate (2) engaging axially into the crown gear (4) with an annular projection (5), the annular, axial projection (5) having a depression (6) in the axial direction, the projection (5) engaging with a form-fitting connection into a depression (7) on an axial side face (8) of the crown gear (4), or an axial projection on the axial side face (8) of the crown gear (4) engaging into the depression (6) of the first plate (2), **characterized in that** the projection on the axial side face (8) of the crown gear (4) is of conical configuration.

2. Power steering system or external power steering system according to Claim 1, **characterized in that** a plurality of depressions (6) are arranged on the annular projection (5) of the first plate (2) in the circumferential direction of the plate (2).

3. Power steering system or external power steering system according to Claim 2, **characterized in that** the depressions (6) are arranged at a uniform spacing (9) from one another and form a driving toothing system (10).

4. Power steering system or external power steering system according to one of Claims 1 to 3, **characterized in that** the depression (6) passes through the annular projection (5) in a rectangular manner in the radial direction of the first plate (2).

5. Power steering system or external power steering system according to one of Claims 1 to 3, **characterized in that** the depression (6) passes through the annular projection (5) in the radial direction of the first plate (2) in a manner which forms curved flanks (11).

6. Power steering system or external power steering system according to one of Claims 1 to 5, **characterized in that** a second plate (12) is arranged on the side (13) which lies opposite the first plate (2) in the axial direction of the crown gear (4).

7. Power steering system or external power steering system according to Claim 6, **characterized in that** the second plate (12) engages with a form-fitting connection on an annular projection (5), which engages axially into the crown gear (4), of a second axial side face (8') of the crown gear (4).

8. Power steering system or external power steering system according to Claim 7, **characterized in that** the number and/or the design of the depressions (6') are/is approximately identical on the second plate (12) and on the first plate (2).

9. Power steering system or external power steering system according to one of Claims 1 to 8, **characterized in that** a plate (2, 12) is formed in one piece with the hub (3).

10. Power steering system or external power steering system according to one of Claims 7 to 9, **characterized in that** the second plate (12) is screwed or riveted to the hub (3) and/or the first plate (2).

11. Power steering system or external power steering system according to one of Claims 7 to 9, **characterized in that** the second plate (12) is connected by rotary friction welding to the hub (3) and/or the first plate (2).

12. Power steering system or external power steering system according to one of Claims 1 to 11, **characterized in that** the crown gear (4) is formed from a thermoplastic or thermosetting plastic.

13. Power steering system or external power steering system according to one of Claims 1 to 12, **characterized in that** the installed gearwheel (1) is part of a power steering system or external power steering system of a vehicle.

14. Power steering system or external power steering system according to Claim 13, **characterized in that** the installed gearwheel (1) is a helical gear of an electric steering system.

## Revendications

1. Direction assistée ou actionnée par une force auxiliaire, comprenant un moteur électrique qui entraîne une transmission à roue hypoïde qui contient une roue dentée montée qui sert de roue hypoïde et qui s'engrène avec une vis qui présente un pignon (4) pouvant être connecté à un moyeu (3) par le biais d'un premier disque (2), le premier disque (2) s'engrenant avec une saillie de forme annulaire (5) axialement dans le pignon (4), la saillie axiale annulaire (5) présentant dans la direction axiale un renfoncement (6), la saillie (5) s'engrenant par engagement positif dans un renfoncement (7) au niveau d'une face latérale axiale (8) du pignon (4) ou une saillie axiale au niveau de la face latérale axiale (8) du pignon (4) s'engrenant dans le renfoncement (6) du premier disque (2), **caractérisée en ce que** la saillie au niveau de la face latérale axiale (8) du pignon (4) est réalisée avec une forme conique.

2. Direction assistée ou actionnée par une force auxiliaire selon la revendication 1, **caractérisée en ce que** l'on prévoit sur la saillie annulaire (5) du premier disque (2) plusieurs renfoncements (6) dans la direction périphérique du disque (2).

3. Direction assistée ou actionnée par une force auxiliaire selon la revendication 2, **caractérisée en ce que** les renfoncements (6) sont disposés à égale distance (9) les uns des autres et forment une denture d'entraînement (10).

4. Direction assistée ou actionnée par une force auxiliaire selon l'une quelconque des revendications 1 à 3, **caractérisée en ce que** le renfoncement (6) traverse en forme de rectangle la saillie annulaire (5) dans la direction radiale du premier disque (2).

5. Direction assistée ou actionnée par une force auxiliaire selon l'une quelconque des revendications 1 à 3, **caractérisée en ce que** le renfoncement (6) traverse la saillie annulaire (5) en formant des flancs courbes (11) dans la direction radiale du premier disque (2).

6. Direction assistée ou actionnée par une force auxiliaire selon l'une quelconque des revendications 1 à 5, **caractérisée en ce qu'**un deuxième disque (12) est disposé du côté opposé (13) au premier disque (2) dans la direction axiale du pignon (4).

7. Direction assistée ou actionnée par une force auxiliaire selon la revendication 6, **caractérisée en ce, que** le deuxième disque (12) s'engrène par engagement positif avec une saillie annulaire (5) d'une deuxième face latérale axiale (8') du pignon (4) s'engrenant axialement dans le pignon (4).

8. Direction assistée ou actionnée par une force auxiliaire selon la revendication 7, **caractérisée en ce que** le nombre et/ou la forme des renfoncements (6') sur le deuxième disque (12) sont sensiblement égaux à ceux sur le premier disque (2).

9. Direction assistée ou actionnée par une force auxiliaire selon l'une quelconque des revendications 1 à 8, **caractérisée en ce qu'**un disque (2, 12) est réalisé d'une seule pièce avec le moyeu (3).

10. Direction assistée ou actionnée par une force auxiliaire selon l'une quelconque des revendications 7 à 9, **caractérisée en ce que** le deuxième disque (12) est vissé ou riveté au moyeu (3) et/ou au premier disque (2).

11. Direction assistée ou actionnée par une force auxiliaire selon l'une quelconque des revendications 7 à 9, **caractérisée en ce que** le deuxième disque (12) est connecté par soudage par friction au moyeu (3) et/ou au premier disque (2).

12. Direction assistée ou actionnée par une force auxiliaire selon l'une quelconque des revendications 1 à 11, **caractérisée en ce que** le pignon (4) est formé de plastique thermoplastique ou duroplastique.

13. Direction assistée ou actionnée par une force auxiliaire selon l'une quelconque des revendications 1 à 12, **caractérisée en ce que** la roue dentée montée (1) fait partie d'une direction assistée ou actionnée par une force auxiliaire d'un véhicule.

14. Direction assistée ou actionnée par une force auxiliaire selon la revendication 13, **caractérisée en ce que** la roue dentée montée (1) est une roue hypoïde d'une direction électrique.
